# EUROPÄISCHE PATENTSCHRIFT

(11) **EP 2 340 107 B1**
(45) Veröffentlichungstag und Bekanntmachung des Hinweises auf die Patenterteilung: **11.05.2016**
(21) Anmeldenummer: 09752104.1
(22) Anmeldetag: 23.10.2009
(51) Int. Cl.: B01D 69/06, B01D 69/10, B01D 67/00, B01D 71/70

(54) **VERFAHREN ZUR HERSTELLUNG EINER VORGEFORMTEN GASDURCHLÄSSIGEN MEMBRAN ODER EINES EINE SOLCHE AUFWEISENDEN MATERIALVERBUNDS FÜR EIN KLEIDUNGSSTÜCK**
METHOD FOR PRODUCING A PREFORMED GAS-PERMEABLE MEMBRANE OR A MATERIAL COMPOSITE COMPRISING SUCH A MEMBRANE FOR A PIECE OF CLOTHING
PROCÉDÉ DE FABRICATION D'UNE MEMBRANE PRÉFORMÉE, PERMÉABLE AUX GAZ, OU D'UN MATÉRIAU COMPOSITE LA COMPRENANT, POUR UNE PIÈCE DE VÊTEMENT

(30) Priorität: 23.10.2008 DE 102008052962
(43) Veröffentlichungstag der Anmeldung: 06.07.2011
(73) Patentinhaber: Karthäuser, Joachim Dr., 19251 Sollentuna (SE); W+R GmbH, 72555 Metzingen (DE)
(72) Erfinder: KARTHÄUSER, Joachim Dr., 19 251 Sollentuna (SE)
(74) Vertreter: Kohler Schmid Möbus Patentanwälte
(86) Internationale Anmeldenummer: PCT/EP2009/007597
(87) Internationale Veröffentlichungsnummer: WO 2010/046118

(56) Entgegenhaltungen:
- US-A- 3 751 536
- US-A1- 2003 150 808

## Beschreibung

Die Erfindung betrifft ein Verfahren zur Herstellung einer vorgeformten gasdurchlässigen Membran oder eines eine solche aufweisenden Materialverbunds für ein Kleidungsstück.

Kleidungsstücke, die eine gasdurchlässige, jedoch wasserundurchlässige Membran aufweisen, sind bekannt. Solche Kleidungsstücke sollen einerseits Tragekomfort bieten, indem Wasserdampf und Hitze abgeführt werden, gleichzeitig aber Schutz vor äußeren Einflüssen, wie Chemikalien, Feuer, Bakterien oder Ähnlichem bieten.

Üblicherweise bestehen solche Kleidungsstücke aus mehreren Lagen, zum Beispiel einer weichen Innenschicht, einer dünnen Membran aus Kunststoff, die Wasserdampf durchlässt, aber nicht flüssiges Wasser, einer weiteren Zwischenschicht sowie einer äußeren Schicht, zum Beispiel aus Leder. Für verschiedene Zwecke, zum Beispiel bei der Anwendung durch die Feuerwehr oder Polizei, können die Schichten unterschiedlich ausgeformt sein. Schichten aus Kevlar-Gewebe verleihen Widerstand gegen extreme Hitze. Metallgeflechte können Schutz vor spitzen Gegenständen bieten.

Für die bekannten Kleidungsstücke ist es üblich, einschichtige Membranen zu erzeugen, dieses passend zuzuschneiden, zum Beispiel in der Form einer Hand, und zwei solcher Membranen an den Rändern zu verkleben oder zu verschweißen, sodass sich die Grundform eines Handschuhs ergibt. Diese Grundform wird mit einem Innenhandschuh verklebt, zum Beispiel indem der Innenhandschuh und die Membran auf eine beheizte Form aufgestülpt werden, sodass unter Hitzeeinwirkung das Gewebe und die Membran miteinander verbunden werden. Ein Nachteil dieser Verfahrensweise ist, dass die Membran bei diesem Prozess Falten wirft, die im Gebrauch zu Undichtigkeiten der unelastischen Membran führen können. Faltenbildung behindert auch die Durchlässigkeit für Wasserdampf. Weiterhin bilden sich Falten an den Verklebungslinien der zwei Membranen, die den Handschuh unnötig verdicken und das Tastempfinden des Trägers negativ beeinflussen.

Die bekannten Membranen können aus PTFE, expandiertem PTFE, Polyether-Polyester oder ähnlichen Kunststoffen hergestellt sein. Solche Membranen sind beispielsweise unter den Markennamen Goretex und Sympatex bekannt. Alle diese bekannten Materialien werden als zweidimensionaler bzw. flächiger Film hergestellt. Die bekannten Membranen verschmutzen leicht, weshalb sie durch Extraschichten, zum Beispiel aus Polyurethan, geschützt werden müssen, die allerdings die Luft- und Wasserdampfdurchlässigkeit begrenzen. Das Zuschneiden und Verkleben der Membranen zu Grundformen für Handschuhe und Schuhe bedeutet einen Materialverlust. Verklebeprozesse sind arbeits- und daher kostenintensiv. Die Verklebungsstellen sind unelastisch und hart. Dadurch wird der Tragekomfort verringert. Wenn Klebestellen an den Fingerspitzen angeordnet sind, können Gegenstände weniger gut ertastet werden.

Die US 2003/0150808 A1 lehrt die Herstellung einer Separationsmembran, die für Wasserbehandlung und -filtrierung eingesetzt wird. Die typischen Porendurchmesser liegen in der Größenordnung von 0,01 bis 0,2 µm, um z. B. Partikel mit einem Durchmesser von 0,9 µm effektiv zurückhalten zu können. Ein poröses Polymermaterial, z. B. PVDF, wird auf einem porösen Träger, z. B. Textil, aufgebracht, wobei Porosität durch Zugabe und spätere Extraktion eines zweiten Materials, z. B. PEG mit hohem Molekulargewicht, erzeugt wird. Zur Extraktion wird eine komplexe Mischung von Lösemittel für Polymer und Antilösemittel eingesetzt.

Die US 3,751,536 lehrt die Herstellung-von mikroporösen Membranen aus PVC, in das als Porenbildner ein Polystyren mit Alkylaminogruppen eingearbeitet ist. Nach der Herstellung eines Films wird das Amino-Polystyren mit wässriger Säure entfernt. Die erhaltenen Poren weisen einen Durchmesser in der Größenordnung von 0,1 µm auf.

Alle beschriebenen Membranen sind in hohem Grade wasserdurchlässig und sind auch für solche Anwendungen wie Ultrafiltration konzipiert.

Aufgabe der vorliegenden Erfindung ist es deshalb, ein vereinfachtes Verfahren zur Herstellung einer gasdurchlässigen Membran bereitzustellen.

Gelöst wird diese Aufgabe erfindungsgemäß durch ein Verfahren zur Herstellung einer vorgeformten gasdurchlässigen, insbesondere wasserdampfdurchlässigen Membran für ein Kleidungsstück mit den Merkmalen des Anspruchs 1.

Eine derart hergestellte Membran hat keine Nähte und keine Falten, sodass die oben beschriebenen Nachteile vermieden werden. Außerdem müssen keine Verbindungsprozesse wie zum Beispiel Kleben oder Schweißung durchgeführt werden. Dadurch ergibt sich eine Zeitersparnis und Kostenreduktion. Ferner fällt kein Verschnitt an. Durch das Verfahren kann auf einfache Art und Weise eine Membran in Form eines herzustellenden Kleidungsstücks hergestellt werden. Beispielsweise kann die dreidimensionale Rohform die Form einer Hand oder eines Fußes haben, sodass die durch das erfindungsgemäße Verfahren hergestellte Membran besonders einfach zur Herstellung eines Handschuhs oder Schuhs verwendet werden kann. Weiter können andere Kleidungsstücke oder Teile dieser Kleidungsstücke, z. B. Hosen, Jacken, Hemden, Westen oder Kopfbedeckungen, durch das erfindungsgemäße Verfahren hergestellt werden. Es versteht sich, dass die Rohform nach dem Eintauchen zur Polymerisation oder zum Härten der Flüssigkeit aus der Flüssigkeit entnommen wird.

Besondere Vorteile ergeben sich, wenn vor dem Eintauchen oder Besprühen der Rohform auf diese eine erste Materialschicht, insbesondere ein textiles Material, aufgebracht wird. Als textiles Material kommen beispielsweise ein Gewebe, ein Gestrick oder so genanntes Non-woven in Betracht. Wenn die Rohform vor dem Eintauchen oder Besprühen mit einer solchen Materialschicht bedeckt wird, bleibt die Flüssigkeit an dieser Materialschicht haften, und es erfolgt ein automatisches Verbinden der Materialschicht mit der Membran, sodass ein Materialverbund entsteht.

Das Anhaften der Flüssigkeit an der ersten Materialschicht kann verbessert werden, wenn die erste Materialschicht vor dem Eintauchen bzw. Besprühen vorbehandelt wird. Beispielsweise kann die erste Materialschicht mit Silikon vorbehandelt werden.

Während der Erstarrungsphase der Flüssigkeit auf der Rohform kann die Rohform gedreht werden, um eine gleichmäßige Bedeckung und gleichmäßige Filmdicke zu erreichen.

Gemäß einer Verfahrensvariante kann vorgesehen sein, dass nach dem Eintauchen oder Besprühen eine zweite Materialschicht aufgebracht wird. Die zweite Materialschicht kann vor, während oder nach der Polymerisation der Membran aufgebracht werden. Als zweite Materialschicht kann beispielsweise ein Gewebe aufgebracht werden. Diese zweite oder weitere Materialschicht kann unterschiedlich ausgeformt sein, z. B. als Stulpe, die eine bessere, stabilere und gegebenenfalls dichte Verbindung zwischen unterschiedlichen Schichten gewährleisten kann, oder auch als Dichtung, sodass sich leicht eine dichte Verbindung zwischen verschiedenen Kleidungsstücken herstellen lassen kann. Weiter kann diese zweite oder weitere Materialschicht z. B. Absorptionsmittel für unterschiedliche chemische und biologische Schadstoffe enthalten, vor denen der Träger geschützt werden soll. Auch der Einbau eines Ventils kann vorgesehen sein, das Überdruck nach außen abführen kann oder auch dem Träger eventuell gefilterte Frischluft zuführen kann.

Weiterhin ist es denkbar, dass die Flüssigkeit oder ausgehärtete Membran beflockt wird. Auch ein Non-woven kann auf die Membran aufgepresst werden. Die Membran kann mit der ersten und/oder zweiten Materialschicht nach der Herstellung von der Rohform abgezogen werden und kann dann entweder "nach links" gewendet (Innenseite nach außen) oder "nach rechts" gewendet (Innenseite bleibt Innenseite) weiterverarbeitet werden.

Auch die zweite Materialschicht kann vor dem Aufbringen vorbehandelt werden, sodass diese besser bzw. leichter an der Flüssigkeit bzw. Membran anhaftet.

Die Gasdurchlässigkeit der Membran wird auf besonders einfache Art und Weise dadurch erreicht, dass nicht reaktives Material durch ein geeignetes Lösemittel aus der Membran entfernt wird. Vorzugsweise wird die gasdurchlässige Membran ohne Verwendung chlorierter Lösungsmittel hergestellt.

Die Flüssigkeit wird erzeugt, indem ein Basismaterial mit einem unter den Herstellungsbedingungen der Membran nicht reaktiven Material gemischt wird. Unter einem nicht reaktiven Material wird im Sinne der Erfindung ein Material verstanden, das unter den Herstellungsbedingungen der Membran im Wesentlichen nicht polymerisiert und im Wesentlichen nicht mit dem Basismaterial chemisch reagiert. Dies bedeutet, dass das nicht reaktive Material mit dem Basismaterial kompatibel (mischbar) ist und unter den Herstellungsbedingungen chemisch nicht nennenswert reagiert. Das nicht reaktive Material bildet vorteilhafterweise zunächst eine kontinuierliche Phase in der Flüssigkeit. Nach der Entfernung des nicht reaktiven Materials ergibt sich eine Membran mit erhöhter Porosität, wobei die Poren sehr kleine Durchmesser aufweisen (in der Größenordnung von z. B. 20 nm bis 50 µm). Durch das Entfernen des nicht reaktiven Materials wird die Membran zu einer semipermeablen Membran, also einer atmungsaktiven Membran, die Gase, insbesondere Wasserdampf, zumindest teilweise durchlässt. Flüssigkeit, insbesondere Wasser, wird jedoch bis zu einer bestimmten Wassersäule, beispielsweise 20 m, nicht durchgelassen. Als Basismaterial werden Silikon, Gummi, thermoplastisches Elastomer (TPE) oder thermoplastisches Urethan (TPU) und/oder Polymere auf der Basis oder hergestellt aus Diolefinen als Basismaterial verwendet. Mit diesen Materialien kann eine elastische Membran hergestellt werden, die ein geringes Gewicht aufweist.

Unter Silikon soll beispielsweise verstanden werden: Silikon basierend auf Dimethylpolysiloxan oder Varianten mit anderen Alkyl- und anderen organischen Gruppen als Methyl, zum Beispiel Ethyl, Oktyl, Phenyl, und fluorierte Varianten, sowohl auf Basis von LSR (Liquid Silikon Rubber) als auch peroxidvernetzes Silikon. Unter Gummi soll beispielsweise verstanden werden: Gummi auf Basis von (Poly-)Isopren, (Poly-) Butadien, (Poly-)Styren-Butadien, sowie fluor- und chlormodifizierte Varianten. Unter TPE soll beispielsweise verstanden werden: Blockkopolymere auf Basis von Styren-Butadien und Styren-Isopren.

Unter TPU soll beispielsweise verstanden werden: thermoplastisches Urethan bestehend aus Glykol und Diisocyanat in Polymerform.

Als nicht reaktives Material kommen in Betracht: Unreaktive Siloxane, Paraffine oder veretherte Glykole. Unreaktive Siloxane kommen beispielsweise im Falle von Silikonmembranen, Paraffine oder veretherte Glykole, die gut mischbar mit dem Membranmaterial sind, im Falle von Gummi- und TPE- oder TPU-Membranen zum Einsatz. Zum Entfernen des nicht reaktiven Materials können klassische organische Lösemittel oder vorzugsweise Kohlendioxid unter Druck (mindestens 20 bar) (flüssig oder überkritisch) verwendet werden. Weiter kann eine Oberflächenbehandlung mit beispielsweise atmosphärischem Plasma durchgeführt werden.

Die Mischung aus Basismaterial und nicht reaktivem Material ist vorzugsweise eine homogene Mischung aus gleichartigen Materialien. Insbesondere ist das nicht reaktive Material kein Lösemittel, sondern eine nicht-flüchtige Komponente, die ohne Risiko für Brand, Exponierung der Arbeiter usw. wiedergewonnen werden kann. Bei dem Gemisch aus Basismaterial und nicht reaktivem Material handelt es sich um ein Einkomponentensystem, welches kein Lösemittel enthält.

Gemäß einer bevorzugten Verfahrensvariante kann vorgesehen sein, dass die Flüssigkeit erhitzt wird. Beispielsweise kann die Flüssigkeit auf eine Temperatur im Bereich zwischen 100 °C und 150 °C, vorzugsweise auf 120 °C, erhitzt werden.

Weiterhin kann vorgesehen sein, dass die Rohform mit darauf angeordneter Membran bzw. Materialverbund erhitzt wird. Beispielsweise kann die Rohform mitsamt der darauf angebrachten Membran auf eine Temperatur im Bereich 150 °C bis 200 °C, vorzugsweise 180 °C, erwärmt werden. Die Erwärmung kann in einem Ofen erfolgen, insbesondere für eine Dauer zwischen 1 und 5 Minuten, vorzugsweise von etwa zwei Minuten.

Besondere Vorteile ergeben sich, wenn die Membran stellenweise verstärkt wird. An Stellen, an denen eine erhöhte Beanspruchung zu erwarten ist, kann die Membran verstärkt werden, sodass sichergestellt wird, dass die Wasserdichtigkeit und Gasdurchlässigkeit an den besonders beanspruchten Stellen lange erhalten bleibt.

Die Verstärkung kann beispielsweise durch Besprühen der Membran mit einem geeigneten Material erfolgen. Vorzugsweise wird das gleiche Material verwendet, welches das Basismaterial der Flüssigkeit bildet.

In den Rahmen der Erfindung fällt außerdem ein Verfahren zur Herstellung eines Kleidungsstücks, insbesondere eines Handschuhs oder eines Schuhs, bei dem zunächst eine gasdurchlässige Membran oder ein Materialverbund mit dem erfindungsgemäßen Verfahren hergestellt wird. Anschließend wird eine Außenmateriallage des Kleidungsstücks mit der Membran bzw. einem Materialstapel (Materialverbund), der die Membran enthält, verklebt. Dabei kann der Kleber entweder auf den Materialstapel oder auf das Außenmaterial aufgebracht werden. Vorzugsweise wird der Klebstoff an den Stellen aufgebracht, die einer besonderen Beanspruchung voraussichtlich unterworfen werden.

Der Verklebungsprozess kann beschleunigt und gefördert werden, wenn die Verklebung unter Erwärmung erfolgt.

In den Rahmen der Erfindung fällt außerdem ein Kleidungsstück, insbesondere ein Schuh oder Handschuh, mit einer Membran oder einem Materialverbund, der mit dem erfindungsgemäßen Verfahren hergestellt wurde.

Besondere Vorteile ergeben sich, wenn die Membran nahtlos ausgebildet ist. Dadurch entstehen keine starren, undehnbaren Stellen. Außerdem können Gegenstände gut ertastet werden. Undichte Stellen im Nahtbereich werden außerdem ausgeschlossen.

Vorzugsweise ist die Membran elastisch ausgebildet. Insbesondere kann die Membran zerstörungsfrei um mehr als 5 %, insbesondere mehr als 50 %, gedehnt werden. Die Dehnung ist hier als Flächenzuwachs zu verstehen, wobei gleichmäßig in zwei senkrecht aufeinander stehende Richtungen gedehnt wird. Eine Materialschicht, die mit der Membran verbunden ist, kann die Elastizität beeinflussen, wenn sie weniger stark elastisch ist als die Membran selbst.

Im Folgenden werden Beispiele zur Verdeutlichung der Erfindung angegeben.

### Beispiel 1:

Eine Rohform wird in eine Mischung aus polymerisationsfähigem Silikon (Elastosil 3003, A und B Komponenten im Verhältnis 1:1) sowie 100 phr Siloxan (z. B. Cyclopentasiloxan oder D5) getaucht, der Mischung entnommen und in einem Ofen bei ca. 180 °C ca. zwei Minuten erhitzt. Nach dem Abkühlen kann von der Form eine Membran abgezogen werden. Die Membran kann mit Lösemittel extrahiert werden, wobei das nicht reaktive Silikonöl (Siloxan) vollständig entfernt wird.

### Beispiel 2:

Wie Beispiel 1, der Rohform wird jedoch vor dem Eintauchen ein Gewebe übergezogen, sodass sich die Membran als Verbund mit dem Gewebe ergibt. Das Gewebe ist zweckmäßigerweise mit Silikon vorbehandelt, was eine flächig deckende Silikonlage erleichtert.

### Beispiel 3:

Wie Beispiele 1 oder 2, jedoch wird nach der Polymerisation der Membran oder dem Verbund aus Gewebe und Membran ein weiteres Gewebe oder Non-woven übergestülpt, sodass sich ein dreilagiger Verbund mit der Membran in der Mitte ergibt. Das genannte weitere Gewebe kann auch mit Silikon oder polymerisationsfähigem Silikon vorbehandelt sein, sodass eine weitere Wärmebehandlung wie in Beispiel 1 eine bessere mechanische Verbindung, eine zweite Membranschicht oder beides bedeutet.

### Beispiel 4:

Eine Rohform wird in eine Mischung aus thermoplastischem Elastomer (TPE), dem nicht reaktives Material zugesetzt wurde, getaucht. Das Elastomer ist zweckmäßigerweise aufgeheizt auf z. B. 120 °C. Beim Abkühlen der Rohform nach der Entnahme aus dem Bad erstarrt oder härtet das Elastomer und gleicht dann in seinen Eigenschaften, z. B. Elastizität, vulkanisiertem Gummi. Geeignete Materialien sind TPEs, die unter dem Handelsnahmen "Kraton" erhältlich sind, inklusive Latexvarianten. Die Verfahrensmodifikationen gemäß der Beispiels 2 und 3 sind auch anwendbar bei dem Arbeiten mit TPE.

### Beispiel 5:

Nach der Herstellung der Innenform eines Kleidungsstücks, z. B. eines Materialverbunds bestehend aus Gewebe - Membran - Gewebe, wird die Aufgabe, einen guten Verbund der Innenform mit der Außenform eines Schuhs oder eines Handschuhs zu schaffen, in der folgenden Weise gelöst: Ein Kleber, z. B. ein Silikonkleber für Gewebe mit einer Silikonmembran bzw. ein Heißkleber auf TPE-Basis für Membranen aus TPE, wird an bestimmten, speziell beanspruchten Punkten oder Flächen aufgetragen. Dies kann auf oder nach Umstülpen in der Außenform oder auf der Innenform geschehen. Die Außenform wird danach auf die Innenform gestülpt. Nach Erhitzen ergibt sich ein starker Verbund.

### Beispiel 6:

Bei besonderen mechanischen Beanspruchungen ist es vorteilhaft, eine Membran gemäß einem der Beispiele 1 bis 4 nachträglich zu verdicken, z. B. zwischen den Fingern oder an anderen Stellen, an denen Verbiegen oder Reibung im Gebrauchsfall zu erwarten ist. Dieses kann durch Sprühen von flüssigem TPE oder Silikon auf diese Stellen erreicht werden.

Die Membranen in den genannten Beispielen können zerstörungsfrei um mehr als 10 % und häufig mehr als 50 % gedehnt werden. Dehnung ist hier als Flächenzuwachs zu verstehen, wobei gleichmäßig in zwei senkrecht aufeinander stehende Richtungen gedehnt wird. Allein die Gewebeunterlage, die häufig weniger elastisch ist als Gummi, begrenzt die Dehnung des Verbundes.

Die Membranen sind hochgradig gasdurchlässig und durchlässig für RET-Werte je nach Ausführung deutlich unter 12 und weisen eine hohe Wasserdampfdurchlässigkeit auf, die z.B. entsprechend oder höher als 3000 * 10⁻⁹ cm³ (RTP) * cm / sek * cm² * cm Hg delta P sein kann. Hierbei bedeutet RTP "room temperature and pressure", also 20 °C und 1 atm Standarddruck, und der genannte Wert den Gasfluss in cm³/s durch eine Membran von 1 cm Dicke und 1 cm² Fläche angibt bei einem Differenzdruck (delta P) von 1 cm Quecksilbersäule, also 13,2 mbar. Die Wasserdampfdurchlässigkeit wird auch als MVTR (moisture vapour transmission rate) angegeben, und je nach Ausführung weisen die Membranen Werte von > 8 000 g/m²*Tag auf, was als sehr gut gilt.

### Beispiel 7:

Statt durch Eintauchen in flüssiges Rohmaterial wird die Rohform mittels einer Spraypistole mit Material, das zur Membranbildung geeignet ist, beaufschlagt. Die resultierenden Membranen sind vergleichbar mit denen, die durch Eintauchen erzeugt würden. Das Material sollte allerdings nicht zu viskös sein. Gegebenenfalls kann die Viskosität durch Erwärmen erniedrigt werden.

Es ergeben sich die folgenden Vorteile: Das Zuschneiden und Verkleben von flächigem Membranenmaterial entfällt völlig. Dies spart Arbeitszeit und Material. Die Herstellung der Membranen kann automatisch geschehen. Das arbeitsaufwändige Verbinden von Membran und Gewebe entfällt völlig. Es bilden sich keine Falten bei dem genannten Verbinden. Besonders beanspruchte Stellen können leicht stabiler gestaltet werden.

## Patentansprüche

1. Verfahren zur Herstellung einer vorgeformten gasdurchlässigen Membran oder eines eine solche aufweisenden Materialverbunds für ein Kleidungsstück mit den Verfahrensschritten:
a) Erzeugen einer zur Herstellung einer gasdurchlässigen Membran geeigneten Flüssigkeit, indem als Basismaterial Silikon, Gummi, thermoplastisches thermoplastisches Polymere hergestellt Elastomer oder Urethan und/oder auf der Basis oder aus Diolefinen und als nicht reaktives Material Siloxan, Paraffin oder veretherte Glykole vermischt werden;
b) Eintauchen einer dreidimensionalen Rohform in die Flüssigkeit oder Besprühen der dreidimensionalen Rohform mit der Flüssigkeit;
c) Erzeugen einer elastischen Membran durch Polymerisieren und/oder Härten der die Rohform bedeckenden Flüssigkeit;
d) Entfernen nicht reaktiven Materials aus der elastischen Membran zur Erzeugung einer gasdurchlässigen Membran.

2. Verfahren nach Anspruch 1, **dadurch gekennzeichnet, dass** vor dem Eintauchen oder Besprühen der Rohform auf diese eine erste Materialschicht, insbesondere ein textiles Material, aufgebracht wird.

3. Verfahren nach einem der vorhergehenden Ansprüche, **dadurch gekennzeichnet, dass** die erste Materialschicht vor dem Eintauchen oder Besprühen vorbehandelt wird, insbesondere mit Silikon vorbehandelt wird.

4. Verfahren nach einem der vorhergehenden Ansprüche, **dadurch gekennzeichnet, dass** die mit Flüssigkeit bedeckte Rohform gedreht wird.

5. Verfahren nach einem der vorhergehenden Ansprüche, **dadurch gekennzeichnet, dass** nach dem Eintauchen oder Besprühen eine zweite Materialschicht aufgebracht wird.

6. Verfahren nach einem der vorhergehenden Ansprüche, **dadurch gekennzeichnet, dass** das nicht reaktive Material durch ein geeignetes Lösemittel aus der Membran entfernt wird.

7. Verfahren zur Herstellung eines Kleidungsstücks, insbesondere eines Handschuhs, eines Schuhs, einer Socke, einer Kopfbedeckung, einer Hose oder einer Jacke, bei dem zunächst eine gasdurchlässige Membran oder ein Materialverbund nach einem der Ansprüche 1 bis 6 hergestellt wird und mit einer Außenmateriallage des Kleidungsstücks verklebt wird.

8. Verfahren nach Anspruch 7, **dadurch gekennzeichnet, dass** eine Stulpe an dem Kleidungsstück zur stabilen und gegebenenfalls dichten Verbindung zwischen unterschiedlichen Schichten der Kleidungsstücke angebracht wird.

9. Kleidungsstück, insbesondere ein Handschuh, ein Schuh, eine Socke, eine Kopfbedeckung, eine Hose oder eine Jacke, mit Membran oder Materialverbund, das in einem Verfahren nach einem der Ansprüche 1 bis 7 hergestellt wurde.

10. Kleidungsstück nach Anspruch 9, **dadurch gekennzeichnet, dass** die Membran nahtlos ausgebildet ist.

11. Kleidungsstück nach einem der Ansprüche 9 oder 10, **dadurch gekennzeichnet, dass** es elastisch ausgebildet ist.

12. Kleidungsstück nach einem der Ansprüche 9 bis 11, **dadurch gekennzeichnet, dass** eine Dichtung zur dichten Verbindung verschiedener Kleidungsstücke, wie Socke und Hose, oder Handschuh und Jacke, vorgesehen ist.

## Claims

1. Method for producing a preformed gas-permeable membrane or a material composite comprising such a membrane for a piece of clothing with the steps according to the method:
a) Creating a liquid suitable for producing a gas-permeable membrane, in which silicon, rubber, thermoplastic elastomer or thermoplastic urethane and/or polymers based on or produced from diolefins as the basic material and siloxane, paraffin or etherified glycols as the non-reactive material are mixed;
b) Dipping a three-dimensional raw form into the liquid or spraying the three-dimensional raw form with the liquid;
c) Creating an elastic membrane by polymerising and/or hardening the liquid covering the raw form;
d) Removing non-reactive material from the elastic membrane to create a gas-permeable membrane.

2. Method according to claim 1, **characterised in that** a first layer of material, particularly a textile material, is applied to the raw form before the dipping or spraying.

3. Method according to one of the previous claims, **characterised in that** the first layer of material is pretreated, particularly pretreated with silicone, before the dipping or spraying.

4. Method according to one of the previous claims, **characterised in that** the raw form covered with liquid is turned,

5. Method according to one of the previous claims, **characterised in that** a second layer of material is applied after the dipping or spraying.

6. Method according to one of the previous claims, **characterised in that** the non-reactive material is removed from the membrane by a suitable solvent.

7. Method for producing a piece of clothing, particularly a glove, a shoe, a sock, a head covering, trousers or a jacket, in which first a gas-permeable membrane or a material composite is produced according to one of claims 1 to 6 and stuck to an outer layer of material of the piece of clothing.

8. Method according to claim 7, **characterised in that** a cuff is applied to the piece of clothing for a stable and if necessary sealed connection between different layers of the pieces of clothing.

9. A piece of clothing, particularly a glove, a shoe, a sock, a head covering, trousers or a jacket, with a membrane or material composite, which was produced in a method according to one of claims 1 to 7.

10. A piece of clothing according to claim 9, **characterised in that** the membrane is embodied seamlessly.

11. A piece of clothing according to one of claims 9 or 10, **characterised in that** it is embodied elastically.

12. A piece of clothing according to one of claims 9 to 11, **characterised in that** a seal is provided for a sealed connection between various pieces of clothing, such as socks and trousers or gloves and jacket.

## Revendications

1. Procédé de fabrication d'une membrane préformée, perméable au gaz, ou d'un matériau composite la comprenant, pour une pièce de vêtement, avec les étapes de procédé:
a) production d'un liquide approprié pour la fabrication d'une membrane perméable au gaz par le fait que, comme matériau de base, du silicone, du caoutchouc, de l'élastomère thermoplastique ou de l'uréthane thermoplastique et/ou des polymères sur la base ou fabriqués à partir de dioléfines et, en tant que matériau non réactif, du siloxane, de la paraffine ou des glycols éthérifiés sont mélangés ;
b) immersion d'une forme brute tridimensionnelle dans le liquide ou aspersion de la forme brute tridimensionnelle avec le liquide ;
c) production d'une membrane élastique par polymérisation et/ou durcissement du liquide couvrant la forme brute ;
d) enlèvement de matériau non réactif hors de la membrane élastique pour la production d'une membrane perméable au gaz.

2. Procédé selon la revendication 1, **caractérisé en ce que**, avant l'immersion ou l'aspersion de la forme brute, une première couche de matériau, en particulier un matériau textile, est appliquée sur la forme brute.

3. Procédé selon l'une des revendications précédentes, **caractérisé en ce que** la première couche de matériau est prétraitée avant l'immersion ou l'aspersion, en particulier est prétraitée avec de la silicone.

4. Procédé selon l'une des revendications précédentes, **caractérisé en ce que** la forme brute recouverte par le liquide est tournée.

5. Procédé selon l'une des revendications précédentes, **caractérisé en ce que**, après l'immersion ou l'aspersion, une deuxième couche de matériau est appliquée.

6. Procédé selon l'une des revendications précédentes, **caractérisé en ce que** le matériau non réactif est enlevé de la membrane par un solvant approprié.

7. Procédé de fabrication d'une pièce de vêtement, en particulier d'un gant, d'une chaussure, d'une chaussette, d'un couvre-chef, d'un pantalon ou d'une veste, dans lequel, dans un premier temps, une membrane perméable au gaz ou un matériau composite est fabriqué(e) selon l'une des revendications 1 à 6 et est collé(e) à une nappe de matériau extérieure de la pièce de vêtement.

8. Procédé selon la revendication 7, **caractérisé en ce qu'**une manchette est mise en place sur la pièce de vêtement pour le raccordement stable et éventuellement étanche entre différentes couches des pièces de vêtements.

9. Pièce de vêtement, en particulier gant, chaussure, chaussette, couvre-chef, pantalon ou veste, avec une membrane ou un matériau composite, qui a été fabriquée selon l'une des revendications 1 à 7.

10. Pièce de vêtement selon la revendication 9, **caractérisée en ce que** la membrane est constituée sans couture.

11. Pièce de vêtement selon l'une des revendications 9 ou 10, **caractérisée en ce qu'**elle est constituée de façon élastique.

12. Pièce de vêtement selon l'une des revendications 9 à 11, **caractérisée en ce qu'**il est prévu un joint d'étanchéité pour le raccordement étanche de différentes pièces de vêtements tels que chaussette et pantalon, ou gant et veste.
